# EUROPÄISCHE PATENTSCHRIFT

(11) **EP 1 601 889 B1**
(45) Veröffentlichungstag und Bekanntmachung des Hinweises auf die Patenterteilung: **20.04.2011**
(21) Anmeldenummer: 04711307.1
(22) Anmeldetag: 14.02.2004
(51) Int. Cl.: F16H 63/30

(54) **SCHALTVORRICHTUNG**
SHIFTING DEVICE
DISPOSITIF DE CHANGEMENT DE VITESSE

(30) Priorität: 10.03.2003 DE 10310277
(43) Veröffentlichungstag der Anmeldung: 07.12.2005
(73) Patentinhaber: Schaeffler Technologies GmbH & Co. KG, 91074 Herzogenaurach (DE)
(72) Erfinder: KIENE, Klaus, 55450 Langenlonsheim (DE); TRISSLER, Arnold, 91074 Herzogenaurach (DE)
(86) Internationale Anmeldenummer: PCT/EP2004/001404
(87) Internationale Veröffentlichungsnummer: WO 2004/081419

(56) Entgegenhaltungen:
- EP-A- 0 383 493
- DE-A- 19 816 385

## Beschreibung

### Gebiet der Erfindung

Die Erfindung betrifft eine Schaltvorrichtung mit wenigstens einem Schaltelement auf einer Welle, wobei das Schaltelement quer von einer Längsachse der Welle von der Welle weg in zumindest eine Richtung hervorsteht sowie das Schaltelement längs auf der Welle in zueinander entgegengesetzte Verlaufsrichtungen der Längsachse festgelegt ist und wobei die Welle in wenigstens einem Lager quer gerichtet zur Längsachse abgestützt und dabei in dem Lager beweglich gelagert ist.

### Hintergrund der Erfindung

Eine derartige Schaltvorrichtung ist in DE 198 16 385 beschrieben. Die Schaltvorrichtung weist zwei der Schaltelemente auf einer Schaltwelle auf. Eines der Schaltelemente ist ein Schieber und das andere ist ein Schaltfinger. Der Schieber ist relativ zu der Schaltwelle um die Längsachse der Schaltwelle drehbar. Der Schaltfinger ist an der Schaltwelle in die Schwenkrichtungen der Schaltwelle um die Längsachse fest. Die Schaltelemente sind auf der Schaltwelle axial in die Verlaufsrichtungen der Schaltwelle mittels Sicherungsringen fixiert. Diese Sicherungselemente liegen sich auf der Schaltwelle einander gegenüber und halten das "Paket" der um die Längsachse in der Stellung zueinander beweglichen Schaltelemente längs zwischen sich. Die Schaltwelle ist in dem Schaltgetriebe mittels zwei Lagern axial in die Verlaufsrichtungen der Längsachse verschiebbar sowie um die Längsachse schwenkbar radial, also quer zur Längsachse der Welle abgestützt, gelagert. Die Lager sind in dieser Anwendung Gleitlager in Form von Gleitbuchsen. Derartige Schaltwellen sind häufig auch mittels Wälzlagern gelagert. In so einem Fall ist in der zuvor betrachteten Anwendung ein kombiniertes Linear-Rotativ-Wälzlager oder ein kombiniertes Linear-Gleitlager in Verbindung mit einem Rotativ-Wälzlager einzusetzen.

EP 0 383 493 A2 zeigt eine Schaltvorrichtung der gattungsbildenden Art, in der Schaltelemente in Verlaufsrichtung einer Welle längs mittels eines im Lager beweglichen Lagerelementes in Form einer Distanzhülse festgesetzt sind. Das Lagerelement ist Funktionselement und Gleitelement des als Gleitlager ausgelegten Lagers zugleich. Durch den Festsitz des Lagers auf der Welle sind die Schaltelemente in Form von Schaltfingern und Schiebern axial auf der Welle gesichert.

### Zusammenfassung der Erfindung

Die Aufgabe der Erfindung ist es, den Aufwand bei der Herstellung der Einzelteile in der Vorrichtung, die Anzahl der in der Vorrichtung verwendeten Bauteile als auch der Aufwand bei der Montage der Vorrichtung zu reduzieren.

Die Aufgabe ist nach dem Gegenstand des kennzeichnenden Teiles des Anspruchs 1 dadurch gelöst, dass das Schaltelement formschlüssig um die Längsachse verdrehfest zur Welle auf der Welle sitzt.

Ein auf der Welle schwenkbares Schaltelement ist z. B. ein Schwenkhebel mit einem oder mehr Schwenkarmen. Jeder der Schwenkarme erstreckt sich von der Längsachse aus in eine andere Richtung als der andere Schwenkarm der Schwenkarme. Der mittels eines Schaltgliedes geschwenkte Schwenkhebel überträgt Schaltbewegungen auf ein weiteres Schaltglied. Schaltkräfte bzw. Schaltwege sind dabei durch den Schwenkhebel in Abhängigkeit der Abstände der Schwenkarme von der Längsachse zu dem jeweiligen Schaltglied Unter- bzw. Übersetzt. Die Welle ist in dieser Anwendung die Schwenkachse für den Schwenkhebel. Außerdem ist die Welle für andere Zwecke in dem Lager um die Längsachse schwenkbeweglich und/oder zusammen mit dem Schwenkhebel längs beweglich gelagert.

Weiterhin gibt es Schaltelemente, die nicht verdrehfest (drehfrei) auf der Welle sitzen, jedoch an der Umgebungskonstruktion zur Schaltvorrichtung relativ zur Welle und zum Schaltgetriebe um die Längsachse verdrehfest gehalten sind. In diesem Fall ist die Welle in dem Sitz des Schaltelementes relativ zu dem diesbezüglich unbeweglichen Schaltelement verdrehbar.

Für ein einseitig hebelartig quer von der Welle abstehendes Schaltelement, für ein Schaltelement mit zwei und mehr Schwenkarmen sowie für ein rotationssymmetrisch bzw. exzentrisch um die Welle ausgebildetes Schaltelement sieht eine Ausgestaltung der Erfindung vor, dass das axial auf der Welle mittels des Lagerelementes fixierte Schaltelement formschlüssig in die Welle eingreift. Dabei ist der Formschluss mit der Welle in Dreh- bzw. Schwenkrichtung um die Längsachse mittels einer Profitwette-Nabe-Verbindung vorgesehen. Das Schaltelement ist damit an der Welle fest und entweder mit der Welle schwenkbar bzw. drehbar oder mit einer nur längsbeweglichen Welle verschiebbar. Der Querschnitt der Welle weicht dabei generell von der runden Querschnittsform ab. Die Welle ist z. B. abgeflächt oder ein Mehrkantprofil. Alternativ dazu ist die Welle umfangsseitig mit Längs-/Keilnuten bzw. einer Kerbverzahnung und ähnlichem versehen. Die Keilnuten verlaufen parallel zu der Längsachse. Eine in der erfindungsgemäßen Vorrichtung verwendete Welle ist vorzugsweise durch Strangpressen hergestellt.

Das Schaltelement weist eine nabenartige Basis, eine Nabe oder ein Auge auf, mit der/dem es die Welle umgreift bzw. mit der/dem es auf dieser Welle sitzt. Die Kontur des Auges in der Nabe ist der Außenkontur der Welle im Querschnitt angepasst. Aus der Nabe steht z. B. wenigstens ein bzw. stehen vorzugsweise mehrere einteilig mit dem Schaltelement ausgebildete sowie aus der Nabe in das Auge nach innen gerichtete Keile oder keilförmig ausgebildete Vorsprünge in Richtung der Längsachse hervor. Alternativ dazu ist die nabenförmig ausgebildete Basis oder die Nabe mit mindestens einer der Keilnuten versehen, die jeweils einer der Keilnuten an der Welle radial gegenüberliegt. Die formschlüssige Verbindung ist in diesem Fall durch eine oder mehrere zwischen die Welle und das Schaltelement in die Keilnuten gelegte Passfeder(n) bzw. durch einen oder mehrere Keil(e) hergestellt. Der Keil korrespondiert zumindest in Umfangsrichtung mit der Längsnut formschlüssig.

Eine weitere Ausgestaltung der Erfindung sieht vor, dass die Vorrichtung wenigstens zwei oder mehr der Schaltelemente aufweist. So ist es z. B. denkbar, dass eine Schaltwelle für ein fünfgängiges Getriebe oder für ein sechsgängiges Getriebe fünf oder sechs bzw. mehr der Schaltelemente aufweist. Die Schaltelemente gleichen oder unterscheiden sich wahlweise hinsichtlich ihrer Ausführung und Funktion voneinander. So ist es denkbar, dass wahlweise, wie in der zuvor beschriebenen Vorrichtung des Standes der Technik, ein oder mehrere Schaltelemente Schieber und Schaltfinger sind. Die Schaltelemente sind gemeinsam oder jedes für sich auf der Schaltwelle bzw. mit der Schaltwelle um die Längsachse zumindest schwenkbar, aber wahlweise auch fest. Alternativ dazu ist wenigstens eines der gemeinsam mittels des Lagerelementes axial fixierten Schaltelemente schwenkbar auf der Schaltwelle angeordnet, während zumindest ein anderes dieser Schaltelemente verdrehfest an der Welle fixiert ist.

Die Schaltelemente sind auf der Welle unmittelbar benachbart oder durch beispielsweise ein Distanzstück bzw. andere auf der Welle sitzende Bauteile des Getriebes voneinander getrennt benachbart auf der Welle angeordnet. Für die um die Längsachse relativ zu der Welle dreh- bzw. schwenkbaren Schaltelemente ist in diesem Fall kein Formschluss mit der Welle in Schwenkrichtung vorgesehen. Die Nuten bzw. Abflachungen usw. an der Welle sind vorzugsweise wenigstens in die Verlaufsrichtungen so lang, wie die Breite (in Richtung des Lagerelementes) des gesamten durch das Lagerelement axial zu fixierenden Paketes an Bauteilen. Alternativ dazu weist die Welle zumindest nur in den Bereichen, in denen eine formschlüssige Verbindung mit einzelnen der Schaltelemente hergestellt ist, einen von der kreisrunden Form abweichenden Querschnitt auf.

Bei der Montage der Schaltelemente werden die Schaltelemente und ggf. andere Bauteile einzeln auf die Welle geschoben (aufgefädelt) und mittels eines oder auch zwei der Lagerelemente festgesetzt. Mittels nur eines Lagerelementes axial fixierte Schaltelemente stützen sich in die von dem Lagerelement wegweisende axiale Richtung beispielsweise an einem Wellenabsatz ab. Zwei der Lagerelemente nehmen die Schaltelemente sowie ggf. andere Bauteile längs zwischen sich.

Es ist weiter vorgesehen, dass die Schaltelemente zumindest hinsichtlich der Anzahl und der Geometrie der formschlüssigen Elemente, jedoch auch gänzlich gleich gestaltet sind. Die Verwendung von Gleichteilen zur Herstellung einer derartigen Vorrichtung hat Vorteile. Die Anzahl der Fertigungseinrichtungen ist reduziert. Der Aufwand für die Lagerung und den Transport sowie der Aufwand bei der Montage der Bauteile auf die Welle ist reduziert. Verwechslungen, wie diese bei zueinander ähnlich gestalteten Schaltelemente in der Reihenfolge und der Ausrichtung bei der Montage auf die Welle auftreten können, sind ausgeschlossen.

Eine Ausgestaltung der Erfindung berücksichtigt, dass wenigstens eines der Schaltelemente in eine erste Richtung quer von der Längsachse weg gerichtet ist und dass wenigstens ein weiteres der Schaltelemente in eine, sich von der ersten Richtung unterscheidende, zweite Richtung quer von der Längsachse weg gerichtet ist. Es ist davon auszugehen, dass bei mehreren der Schaltelemente zumindest einige, wenn nicht jedes der Schaltelemente in eine andere Richtung quer von der Welle absteht. Die formschlüssigen Elemente wie Keile sind vorzugsweise von Schaltelement zu Schaltelement und bevorzugt auch an einer Nabe eines Schaltelementes selbst mit gleicher Teilung um die Längsachse zueinander angeordnet. So ist es möglich, dass dann mehrere dieser Bauteile auf einer Welle z. B. mit drei der Längsnuten in drei und mehr, auf einer Welle mit vier der Längsnuten in vier und mehr und auf einer Welle mit fünf und mehr Nuten in fünf usw. zueinander unterschiedliche Richtungen ragen.

An einem zur Welle festen Schaltelement ist nach einer Ausgestaltung der Erfindung mindestens ein Schaltfinger vorgesehen. Der Schaltfinger steht einseitig von der Welle ab und ist mittels Verdrehen und/oder Verschieben der Welle mit der Welle bewegt. An der Welle initiierten Schalt- bzw. Wählbewegungen setzt der mit der Welle schwenkende oder der in die Verlaufsrichtungen der Längsachse mit der Welle verschobene Schaltfinger z. B. in Längsbewegungen an Schaltschienen, Schaltgabeln oder ähnlichen um.

Die Welle ist beispielsweise eine Schaltwelle oder ein Schwenkbolzen und in dem Lager quergerichtet zur Längsachse abgestützt sowie alternativ je nach der Verwendung in wenigstens einem Lager mit unterschiedlichen Freiheitsgraden beweglich gelagert:
a) die Welle ist verdrehfest zum Lager sowie in die Verlaufsrichtungen der Längsachse längsbeweglich,
b) die Welle ist in die Verlaufsrichtungen der Längsachse festgelegt sowie um die Längsachse zumindest schwenkbeweglich oder alternativ um die Längsachse drehbeweglich,
c) die Welle ist um die Längsachse sowohl schwenkbeweglich oder alternativ drehbeweglich als auch in die Verlaufsrichtungen längsbeweglich.

Das Lagerelement ist, wie eine Ausgestaltung der Erfindung vorsieht, ein Innenring eines Radiallagers. Vorzugsweise ist das Radiallager ein Rollenlager oder Nadellager, so dass der Innenring umfangsseitig eine Laufbahn für rollenförmige Wälzkörper, wie Rollen oder Nadeln, aufweist. Das Lagerelement ist alternativ dazu eine Innenhülse eines Linearlagers für eine in die Verlaufsrichtungen längsbewegliche Lagerung der Welle. Weiter ist vorgesehen, dass das Lagerelement eine Innenhülse oder ein Innenring eines kombinierten Linear-Rotativ-Lagers ist. Mit einem derartigen Lager ist die Welle in die Verlaufsrichtungen längsbeweglich sowie um die Längsachse zumindest schwenkbeweglich alternativ drehbeweglich gelagert. Der Innenring ist rotationssymmetrisch ausgebildet und sitzt vorzugsweise mit einem Presssitz auf der Welle. Die Innenhülse ist vorzugsweise durch Kaltumformen von Blech hergestellt und ist formschlüssig, alternativ mittels eines Presssitzes, auf der Welle befestigt. In dem Linearlager sowie in dem kombinierten Lager sind bevorzugt Kugeln als Wälzkörper vorgesehen. Der Einsatz eines Gleitringes, eines Gleitlagers oder einer entsprechend stabil armierten Gleitbuchse mit Sitz auf der Welle ist ebenfalls denkbar.

Die Welle mit den Freiheitsgraden gemäß Variante a) bis c) ist entweder in dem Lager oder außerhalb des Lagers verdrehfest bzw. längsfest zur Umgebung, z. B. in einem Lagerauge eines Schaltgetriebes, gehalten. Wenn die Welle in dem Lager verdrehfest gehalten ist, dann weisen z. B. der Innenring oder die Innenhülse zumindest außen einen von der kreisrunden Form abweichenden Querschnitt auf. Der Innenring bzw. die Hülsen nach Variante b) und c) im Lager und die Innenringe für außerhalb des Lagers nach Variante a) festgelegten Wellen sind beispielsweise zumindest außen zylindrisch ausgebildet. Wenn die Wellen gemäß der Variante b) in dem Lager wenigstens in eine der Verlaufsrichtungen festgelegt ist, ist es denkbar, dass der Innenring oder die Hülse für diese Zwecke außen einen oder zwei radial nach außen gerichtete und die Wälzkörper hintergreifende Borde aufweisen. Die Wälzkörper sind in diesem Falle Kugeln oder Rollen bzw. Nadeln. Es ist auch denkbar, dass die in Linearlagern oder in den kombinierten Lagern verwendeten Hülsen bzw. Innenringe einen radial nach außen gerichteten Bord oder ähnliche Mittel aufweisen, mit denen ein Hub der Welle in die Verlaufsrichtungen festgelegt ist.

Der Vorteil dieser Erfindung liegt darin, dass die Lagerelemente wie Lagerringe und Hülsen mit einer Doppelfunktion versehen sind. Einerseits fixieren diese die Lagerelemente und nehmen dabei axiale Kräfte, z. B. Schaltkräfte, auf. Andererseits dienen die Lagerelemente als Laufbahnen für die Lager, mittels denen die Welle gelagert ist. Zusätzliche Sicherungsringe oder ähnliche der üblicherweise verwendeten Halteelemente entfallen. Der Aufwand für das Herstellen der Bauteile und für die Montage der Bauteile zur Vorrichtung ist reduziert.

### Kurze Beschreibung der Zeichnungen

Es zeigen:
- Figur 1: zeigt ein Ausführungsbeispiel einer mit kombinierten La- gern rotativ und linear beweglich gelagerten Schaltvorrich- tung im Längsschnitt,
- Figur 2: einen weiteren Längsschnitt der Vorrichtung nach Figur 1, geschnitten entlang der Linie II-II,
- Figur 3: die Vorrichtung nach Figur 1 entlang der Linie III-III quer geschnitten,
- Figur 4: eine Frontalansicht der Vorrichtung nach Figur 1 aus der mit IV gekennzeichneten Richtung,
- Figur 5: die Frontalansicht der Welle aus der Vorrichtung nach Fi- gur 1,
- Figur 6: eine alternativ zu der Welle nach Figur 5 gestaltete Welle,
- Figur 7: ein weiteres Ausführungsbeispiel einer erfindungsgemä- ßen, mit Radiallagern gelagerten Schaltvorrichtung, im Längsschnitt und
- Figur 8: den Querschnitt der Vorrichtung nach Figur 7, geschnitten entlang der Linie VIII-VIII.

### Detaillierte Beschreibung der Zeichnungen

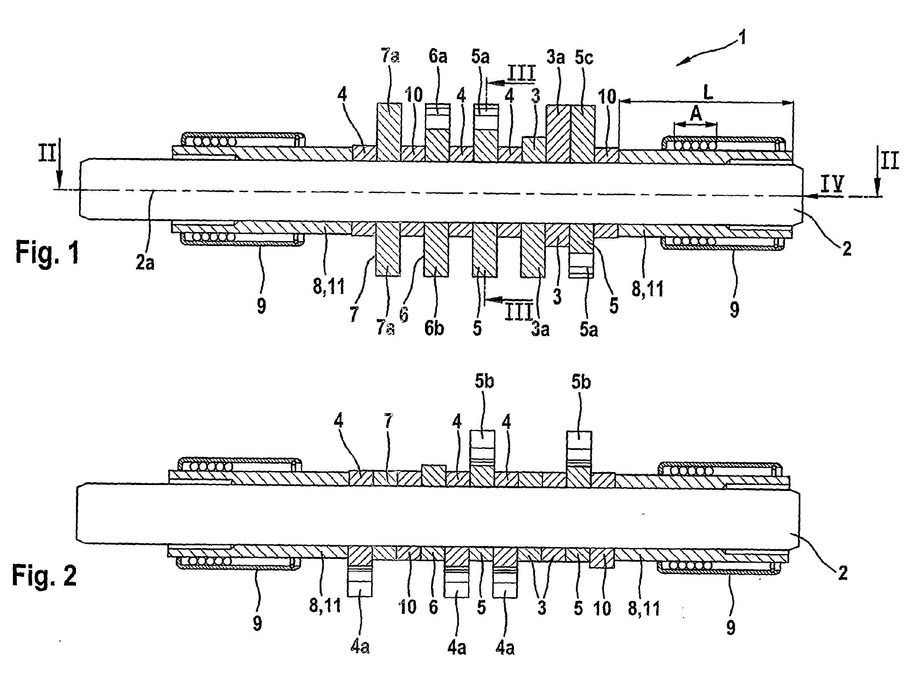

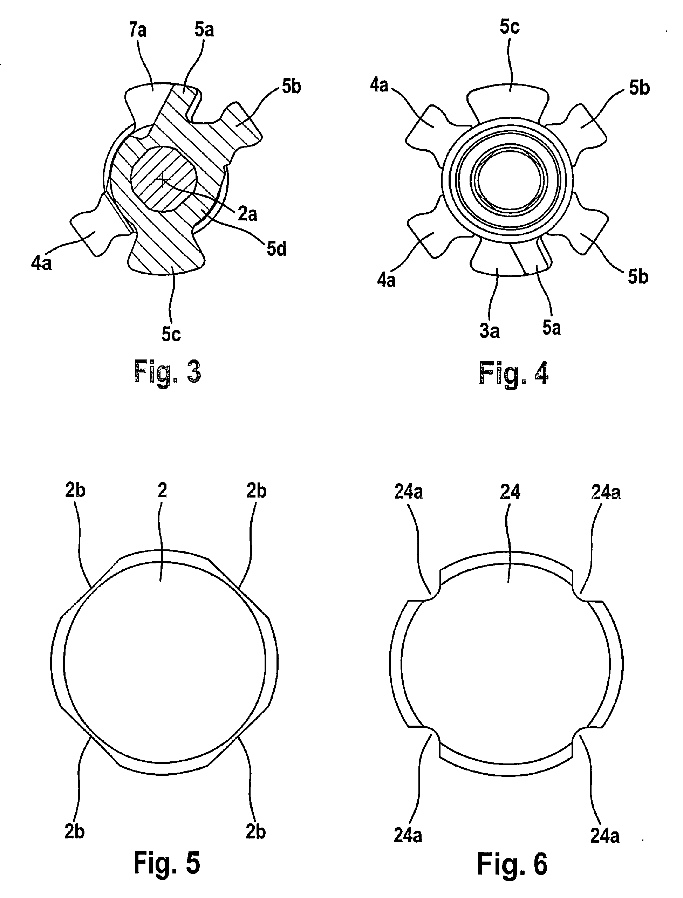

In Figur 1 und Figur 2 ist eine Schaltvorrichtung 1 längs geschnitten dargestellt. Die Schaltvorrichtung 1 ist aus einer Welle 2, aus Schaltelementen 3, 4, 5, 6 und 7, aus den Lagerelementen 8 und den Lagern 9 gebildet. Die Schaltelemente 3 bis 7 sind, wie auch aus den Figuren 3 und 4 ersichtlich ist, hebelartig ausgebildete Stanzteile mit einer Nabe von der Schaltfinger ausgehen.

In Figur 3 ist der Querschnitt des Schaltelementes 5 dargestellt. Jedes der Schaltelemente 3 bis 7 umgreift mit einer der Nabe 5d des Schaltelementes 5 ähnlichen Nabe die Welle 2 formschlüssig. Von der Nabe 5d sind in unterschiedliche Richtungen von der Längsachse 2a der Welle 2 radial weg die Schaltfinger 5a, 5b und 5c weggerichtet.

Von den Schaltelementen 5 sind zwei zueinander spiegelbildlich sowie mit den Schaltfingern 5a, 5b, 5c in verschiedene Richtungen zeigend auf der Welle 2 angeordnet. Zwei Schaltelemente 3 sind unmittelbar zueinander benachbart und weisen jeweils einen Schaltfinger 3a auf. Der Schaltfinger 3a ist wie der Schaltfinger 5c gestaltet. Den Schaltelementen 3 schließt sich auf einer Seite ein Schaltelement 5 und auf der anderen Seite ein Schaltelement 4 an. Drei der Schaltelemente 4 sitzen durch ein Schaltelement 6, ein Distanzstück 10 sowie ein Schaltelement 7 voneinander getrennt oder zu dem Schaltelement 5 benachbart auf der Welle 2. An den Schaltelementen 4 ist jeweils ein Schaltfinger 4a ausgebildet. Das Schaltelement 6 weist zwei Schaltfinger 6a und 6b auf, von denen der Schaltfinger 6a die Form des Schaltfingers 5a sowie der Schaltfinger 6b die Form des Schaltfingers 5c aufweist. Das Schaltelement 7 ist mit zwei voneinander wegweisenden Schaltfingern 7a versehen, deren Gestalt der des Schaltfingers 5c entspricht.

Die Nabe 5d umgreift die Welle 2 in Umfangsrichtung um die Längsachse 2a formschlüssig. Dazu ist die rotationssymmetrisch ausgebildete Welle 2, wie in Figur 5 dargestellt, im Querschnitt mit vier Seitenflächen 2b abgeflacht und ist wie in Figur 3 dargestellt von den Naben der Schaltelemente 3 bis 7 formschlüssig umgriffen.

Die Schaltelemente 3 bis 7 sind mittels der Lagerelemente 8 axial auf der Welle in die Verlaufsrichtungen der Längsachse 2a festgesetzt. Die Lagerelemente 8 sind hohlzylindrische Innenringe 11 der Lager 9. Das Lager 9 ist ein kombiniertes Lager für eine in die Verlaufsrichtungen der Längsachse längsbewegliche sowie um die Längsachse 2a zumindest schwenkbewegliche Lagerung 2. Die Länge L eines jeden der Innenringe 11 ist dabei mindestens so groß wie die Stützbreite A des Lagers 9 zuzüglich des Hubes, mit dem die Welle 2 in die Verlaufsrichtungen verschiebbar ist.

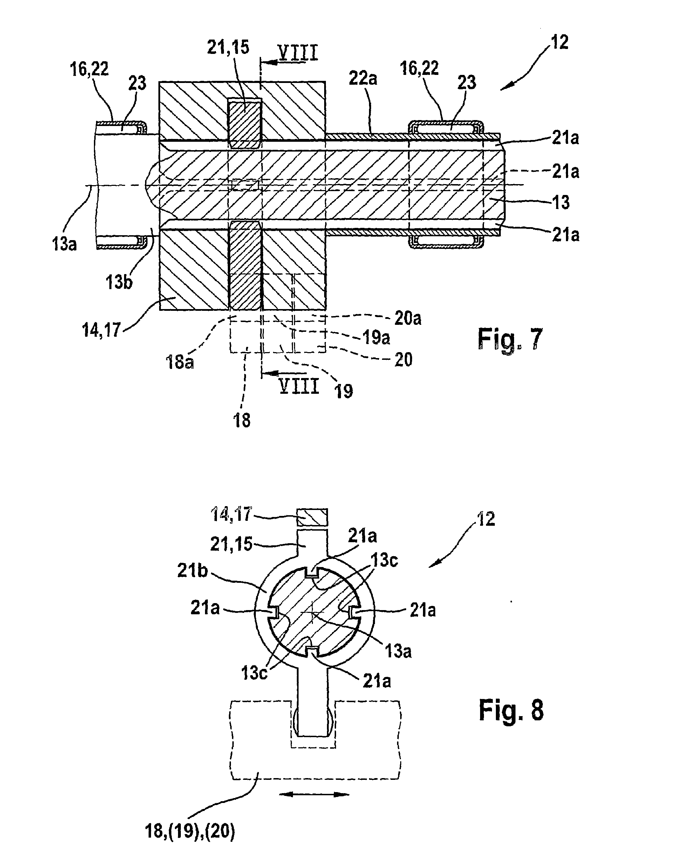

Die Figuren 7 und 8 zeigen eine Schaltvorrichtung 12 in unterschiedlichen Ansichten und unterschiedlich geschnitten. Die Schaltvorrichtung 12 weist eine Welle 13, Schaltelemente 14 und 15 und ein Lagerelement 16 auf. Das Schaltelement 14 ist ein Sperrschieber 17, der in Taschen 18a, 19a, 20a von Schaltschienen 18, 19, 20 zur Längsmittelachse 13a der Schaltwelle verdrehfest gehalten ist. Das Schaltelement 15 ist ein in Schwenkrichtung der Welle 13 formschlüssig eingreifender Schaltfinger 21. Der Formschluss zwischen dem Schaltfinger 21 und der Welle 13 ist über eine Profilwellen-Nabe-Verbindung hergestellt. Dazu greifen radial nach innen auf die Längsachse 13a gerichtete Keile 21 a an der Nabe 21 b des Schaltfingers 21 in längs mit der Längsmittelachse 13a verlaufende Längsnuten 13c an der Welle 13 ein. Eine alternativ zur Welle 13 ausgebildete welle 24 ist mit Figur 6 dargestellt. Dabei unterscheidet sich das Strangpressprofil der Welle 24 durch die Gestaltung der Keilnuten 24a von der Welle 13.

Die Welle 13 ist in den Lagern 22 und auch relativ zu dem Sperrschieber 17 schwenkbar. Mit der Welle 13 schwenkt der Schaltfinger 21 und verschiebt dabei, je nach seiner Position, eine der Schaltschienen 18, 19 oder 20 in die in Figur 8 mit einem Doppelpfeil gekennzeichneten Richtungen.

Der Sperrschieber 17 ist in die eine Verlaufsrichtung der Längsmittelachse 13a axial mittels eines Absatzes 13b der Welle 13 abgestützt. In die andere Verlaufsrichtung ist der Sperrschieber 17 mittels des als Innenring 22a ausgebildeten Lagerelementes 16 des Lagers 22 festgelegt. Das Lager 22 ist ein Radiallager und weist Rollen 23 bzw. Nadeln auf.

Der Schaltfinger 21 ist in die Verlaufsrichtungen der Längsmittelachse 13a durch den Sperrschieber 17 gehalten, jedoch relativ zu dem Sperrschieber 17 mit der Welle 13 schwenkbar. Beim Wählen einer Gasse in dem Schaltgetriebe wird die Welle 13 mit dem Sperrschieber längs der Längsmittelachse 13 verschoben. Dabei nimmt der Sperrschieber 17 den Schaltfinger 21 solange mit, bis der Schaltfinger 21 in eine der Taschen 18a, 19a bzw. 20a der Schaltschienen 18, 19, 20 eingreift. Der Innenring 22a bewegt sich dabei längs durch das Radiallager 22 längs zu den Rollen 23.

### Bezugszeichen

- 1: Schaltvorrichtung
- 2: Welle
- 2a: Längswelle
- 2b: Seitenfläche
- 3: Schaltelement
- 3a: Schaltfinger
- 4: Schaltelement
- 4a: Schaltfinger
- 5: Schaltelement
- 5a: Schaltfinger
- 5b: Schaltfinger
- 5c: Schaltfinger
- 5d: Nabe
- 6: Schaltelement
- 6a: Schaltfinger
- 6b: Schaltfinger
- 7: Schaltelement
- 7a: Schaltfinger
- 8: Lagerelement
- 9: Lager
- 10: Distanzstück
- 11: Innenring
- 12: Schaltvorrichtung
- 13: Welle
- 13a: Längsmittelachse
- 13b: Absatz
- 13c: Längsnut
- 14: Schaltelement
- 15: Schaltelement
- 16: Lagerelement
- 17: Sperrschieber
- 18: Schaltschiene
- 18a: Tasche
- 19: Schaltschiene
- 19a: Tasche
- 20: Schaltschiene
- 20a: Tasche
- 21: Schaltfinger
- 21 a: Keil
- 21 b: Nabe
- 22: Lager
- 22a: Innenring
- 23: Rolle
- 24: Welle
- 24a: Keilnut

## Patentansprüche

1. Schaltvorrichtung (1, 12) mit wenigstens einem Schaltelement (3, 4, 5, 6, 7, 14, 15) auf einer Welle (2, 13), wobei das Schaltelement (3, 4, 5, 6, 7, 14, 15) quer von einer Längsachse (2a, 13a) der Welle (2, 13) von der Welle (2, 13) weg in zumindest eine Richtung hervorsteht sowie das Schaltelement (3, 4, 5, 6, 7) längs auf der Welle (2, 13) in zueinander entgegengesetzte Verlaufsrichtungen der Längsachse (2a, 13a) und dabei in zumindest eine der Verlaufsrichtungen mittels eines in dem Lager (9, 22) beweglichen Lagerelementes (8, 16) des Lagers (9, 22) festgelegt ist indem das Lagerelement (8, 16), die Längsachse (2a, 13a) umgreifend, fest auf der Welle (2, 13) sitzt und wobei die Welle (2, 13) in wenigstens einem Lager (9, 22) quer gerichtet zur Längsachse abgestützt und dabei in dem Lager (9, 22) beweglich gelagert ist, indem sich das Lagerelement (8, 16) in dem Lager (9, 22) abstützt, **dadurch gekennzeichnet, dass** das Schaltelement (3, 4, 5, 6, 7, 15) formschlüssig um die Längsachse (2a, 13a) verdrehfest zur Welle (2, 13) auf der Welle (2, 13) sitzt.

2. Schaltvorrichtung nach Anspruch 1, **dadurch gekennzeichnet, dass** das Schaltelement (3, 4, 5, 6, 7, 15) durch eine Profilwelle-Nabe-Verbindung mit der Welle (2, 13) verbunden ist.

3. Schaltvorrichtung nach Anspruch 2, **dadurch gekennzeichnet, dass** das Schaltelement (15) die Welle (13) mit einer Nabe (21b) umgreift und dabei aus der Nabe (21 b) wenigstens ein einteilig mit dem Schaltelement (15) ausgebildeter Keil (21a) in Richtung der Längsachse (13) hervorsteht und dass das Schaltelement (15) mit dem Keil (21 a) in eine Längsnut (13c) der Welle (13) eingreift, wobei der Keil (21a) zumindest in Umfangsrichtung mit der Längsnut (13c) formschlüssig korrespondiert.

4. Schaltvorrichtung nach Anspruch 2, **dadurch gekennzeichnet, dass** die Vorrichtung (1, 12) wenigstens zwei der Schaltelemente (3, 4, 5, 6, 7, 14, 15) aufweist, wobei die Schaltelemente (3, 4, 5, 6, 7, 14, 15) zueinander benachbart auf der Welle (2, 13) angeordnet und mittels des Lagerelementes (8, 16) festgesetzt sind.

5. Schaltvorrichtung nach Anspruch 2, **dadurch gekennzeichnet, dass** wenigstens ein Schaltelement (3, 4, 5, 6, 7) der Schaltelemente (3, 4, 5, 6, 7) zumindest in eine erste Richtung quer von der Längsachse (2a) weggerichtet ist und dass wenigstens ein weiteres Schaltelement (3, 4, 5, 6, 7) der Schaltelemente (3, 4, 5, 6, 7) in mindestens eine, sich von der ersten Richtung unterscheidende, zweite Richtung quer von der Längsachse (2a) weggerichtet ist.

6. Schaltvorrichtung nach Anspruch 1, **dadurch gekennzeichnet, dass** das Schaltelement (3, 4, 5, 6, 7, 15) wenigstens einen Schaltfinger (3a, 4a, 5a, 5b, 5c, 6a, 6b, 7a, 7b) aufweist.

7. Schaltvorrichtung nach Anspruch 1, **dadurch gekennzeichnet, dass** die Vorrichtung (1) zwei der Lagerelemente (8) aufweist, wobei sich die Lagerelemente (8) auf der Welle einander gegenüberliegen wenigstens eines der Schaltelemente (3, 4, 5, 6, 7) zwischen sich nehmen.

8. Schaltvorrichtung nach Anspruch 1, **dadurch gekennzeichnet, dass** das Lagerelement (16) ein Innenring (22a) eines die Welle (13) radial stützenden Lagers (22) ist.

9. Schaltvorrichtung nach Anspruch 8, **dadurch gekennzeichnet, dass** der Innenring (22a) umfangsseitig eine Laufbahn für rollenförmige Wälzkörper (23) des Lagers (22) aufweist.

10. Schaltvorrichtung nach Anspruch 9, **dadurch gekennzeichnet, dass** der Innenring (22a) in dem Lager (22) zumindest in die Verlaufsrichtungen verschiebbar ist.

11. Schaltvorrichtung nach Anspruch 1, **dadurch gekennzeichnet, dass** das Lagerelement (8) ein Innenring (11) eines kombinierten Lagers (9) für eine in die Verlaufsrichtung längsbewegliche sowie um die Längsachse (2a) zumindest schwenkbewegliche Lagerung der Welle (2) ist.

## Claims

1. Shifting device (1, 12) with at least one shifting element (3, 4, 5, 6, 7, 14, 15) on a shaft (2, 13), the shifting element (3, 4, 5, 6, 7, 14, 15) protruding transversely from a longitudinal axis (2a, 13a) of the shaft (2, 13) away from the shaft (2, 13) in at least one direction, and the shifting element (3, 4, 5, 6, 7) being fixed longitudinally on the shaft (2, 13) in mutually opposite directions of extension of the longitudinal axis (2a, 13a) and here in at least one of the directions of extension by means of a bearing element (8, 16) of the bearing (9, 22), which bearing element is moveable in the bearing (9, 22), by the bearing element (8, 16), engaging around the longitudinal axis (2a, 13a), being seated fixedly on the shaft (2, 13) and the shaft (2, 13) being supported directed transversely with respect to the longitudinal axis in at least one bearing (9, 22) and being mounted moveably here in the bearing (9, 22) by the bearing element (8, 16) being supported in the bearing (9, 22), **characterized in that** the shifting element (3, 4, 5, 6, 7, 15) is seated on the shaft (2, 13) in a form-fitting manner about the longitudinal axis (2a, 13a) and such that it is rotationally fixed with respect to the shaft (2, 13).

2. Shifting device according to Claim 1, **characterized in that** the shifting element (3, 4, 5, 6, 7, 15) is connected to the shaft (2, 13) by a profiled shaft and hub connection.

3. Shifting device according to Claim 2, **characterized in that** the shifting element (15) engages around the shaft (13) with a hub (21b) and at least one key (21a) formed integrally with the shifting element (15) protrudes from the hub (21b) in the direction of the longitudinal axis (13), and **in that** the shifting element (15) engages with the key (21a) in a longitudinal groove (13c) of the shaft (13), the key (21a) corresponding with the longitudinal groove (13c) in a form-fitting manner at least in the circumferential direction.

4. Shifting device according to Claim 2, **characterized in that** the device (1, 12) has at least two of the shifting elements (3, 4, 5, 6, 7, 14, 15), the shifting elements (3, 4, 5, 6, 7, 14, 15) being arranged adjacent to one another on the shaft (2, 13) and being secured by means of the bearing element (8, 16).

5. Shifting device according to Claim 2, **characterized in that** at least one shifting element (3, 4, 5, 6, 7) of the shifting elements (3, 4, 5, 6, 7) is directed away transversely from the longitudinal axis (2a) at least in a first direction, and **in that** at least one further shifting element (3, 4, 5, 6, 7) of the shifting elements (3, 4, 5, 6, 7) is directed away transversely from the longitudinal axis (2a) in at least one second direction differing from the first direction.

6. Shifting device according to Claim 1, **characterized in that** the shifting element (3, 4, 5, 6, 7, 15) has at least one shifting finger (3a, 4a, 5a, 5b, 5c, 6a, 6b, 7a, 7b).

7. Shifting device according to Claim 1, **characterized in that** the device (1) has two of the bearing elements (8), the bearing elements (8) lying opposite each other on the shaft and holding at least one of the shifting elements (3, 4, 5, 6, 7) between them.

8. Shifting device according to Claim 1, **characterized in that** the bearing element (16) is an inner ring (22a) of a bearing (22) supporting the shaft (13) radially.

9. Shifting device according to Claim 8, **characterized in that** the inner ring (22a) has on the circumference a track for trochoidal rolling contact bodies (23) of the bearing (22).

10. Shifting device according to Claim 9, **characterized in that** the inner ring (22a) is displaceable in the bearing (22) at least in the directions of extension.

11. Shifting device according to Claim 1, **characterized in that** the bearing element (8) is an inner ring (11) of a combined bearing (9) for a mounting of the shaft (2) that is moveable longitudinally in the direction of extension and is at least pivotable about the longitudinal axis (2a).

## Revendications

1. Dispositif de changement de vitesse (1, 12) comprenant au moins un élément de changement de vitesse (3, 4, 5, 6, 7, 14, 15) sur un arbre (2, 13), l'élément de changement de vitesse (3, 4, 5, 6, 7, 14, 15) faisant saillie transversalement à un axe longitudinal (2a, 13a) de l'arbre (2, 13) depuis l'arbre (2, 13) dans au moins une direction et l'élément de changement de vitesse (3, 4, 5, 6, 7) étant fixé le long de l'arbre (2, 13) dans des directions d'étendue opposées de l'axe longitudinal (2a, 13a) et en l'occurrence dans au moins l'une des directions d'étendue au moyen d'un élément de palier (8, 16) du palier (9, 22) déplaçable dans le palier (9, 22), en ce que l'élément de palier (8, 16) repose fixement sur l'arbre (2, 13) en venant en prise autour de l'axe longitudinal (2a, 13a), et l'arbre (2, 13) étant supporté dans au moins un palier (9, 22) transversalement à l'axe longitudinal et étant en l'occurrence monté mobile dans le palier (9, 22), en ce que l'élément de palier (8, 16) s'appuie dans le palier (9, 22), **caractérisé en ce que** l'élément de changement de vitesse (3, 4, 5, 6, 7, 15) repose sur l'arbre (2, 13) par engagement positif autour de l'axe longitudinal (2a, 13a) et de manière solidaire en rotation par rapport à l'arbre (2, 13).

2. Dispositif de changement de vitesse selon la revendication 1, **caractérisé en ce que** l'élément de changement de vitesse (3, 4, 5, 6, 7, 15) est connecté à l'arbre (2, 13) par une liaison arbre profilé - moyeu.

3. Dispositif de changement de vitesse selon la revendication 2, **caractérisé en ce que** l'élément de changement de vitesse (15) vient en prise autour de l'arbre (13) avec un moyeu (21b), et en l'occurrence au moins une clavette (21a) réalisée d'une seule pièce avec l'élément de changement de vitesse (15) fait saillie hors du moyeu (21b) dans la direction de l'axe longitudinal (13) et **en ce que** l'élément de changement de vitesse (15) vient en prise avec la clavette (21a) dans une rainure longitudinale (13c) de l'arbre (13), la clavette (21a) correspondant par engagement positif au moins dans la direction périphérique avec la rainure longitudinale (13c).

4. Dispositif de changement de vitesse selon la revendication 2, **caractérisé en ce que** le dispositif (1, 12) présente au moins deux des éléments de changement de vitesse (3, 4, 5, 6, 7, 14, 15), les éléments de changement de vitesse (3, 4, 5, 6, 7, 14, 15) étant disposés les uns à côté des autres sur l'arbre (2, 13) et étant fixés au moyen de l'élément de palier (8, 16).

5. Dispositif de changement de vitesse selon la revendication 2, **caractérisé en ce qu'**au moins un élément de changement de vitesse (3, 4, 5, 6, 7) des éléments de changement de vitesse (3, 4, 5, 6, 7) est orienté au moins dans une première direction transversalement à l'écart de l'axe longitudinal (2a) et **en ce qu'**au moins un autre élément de changement de vitesse (3, 4, 5, 6, 7) des éléments de changement de vitesse (3, 4, 5, 6, 7) est orienté dans au moins une deuxième direction différente de la première direction transversalement à l'écart de l'axe longitudinal (2a).

6. Dispositif de changement de vitesse selon la revendication 1, **caractérisé en ce que** l'élément de changement de vitesse (3, 4, 5, 6, 7, 15) présente au moins un doigt de sélection (3a, 4a, 5a, 5b, 5c, 6a, 6b, 7a, 7b).

7. Dispositif de changement de vitesse selon la revendication 1, **caractérisé en ce que** le dispositif (1) présente deux des éléments de palier (8), les éléments de palier (8), opposés l'un à l'autre sur l'arbre, recevant entre eux au moins l'un des éléments de changement de vitesse (3, 4, 5, 6, 7).

8. Dispositif de changement de vitesse selon la revendication 1, **caractérisé en ce que** l'élément de palier (16) est une bague intérieure (22a) d'un palier (22) supportant radialement l'arbre (13).

9. Dispositif de changement de vitesse selon la revendication 8, **caractérisé en ce que** la bague intérieure (22a) présente du côté périphérique une piste de roulement pour des corps de roulement en forme de rouleaux (23) du palier (22).

10. Dispositif de changement de vitesse selon la revendication 9, **caractérisé en ce que** la bague intérieure (22a) peut être coulissée dans le palier (22) au moins dans les directions d'étendue.

11. Dispositif de changement de vitesse selon la revendication 1, **caractérisé en ce que** l'élément de palier (8) est une bague intérieure (11) d'un palier combiné (9) pour un support de palier de l'arbre (2) déplaçable longitudinalement dans la direction d'étendue et pouvant au moins pivoter autour de l'axe longitudinal (2a).
